# EUROPEAN PATENT APPLICATION

(11) **EP 2 843 858 A1**
(43) Date of publication of application: **04.03.2015**
(21) Application number: 13004199.9
(22) Date of filing: 26.08.2013
(51) Int. Cl.: H04H 20/10, H04H 20/82, H04H 60/12

(54) **Method for providing audio contents to a mobile client device**

(71) Applicant: Panasonic Automotive Systems Company of America, Division of Panasonic Corporation of North America, Peachtree City, GA 30269 (US)
(72) Inventor: Taylor, Arthur, 10247 Berlin (DE); Dawes, Chris, 10997 Berlin (DE)
(74) Representative: Schmidt, Steffen J.

(57) **Abstract**

A computer implemented method for providing audio contents as a plurality of tracks to be played on a listener's mobile client device with Internet radio capabilities, the client device intended to be connected to the Internet. The method comprises: obtaining, as a listener's input into the listener's client device, a playlist definition; selecting, from a plurality of tracks, tracks meeting the playlist definition to form a playlist, wherein the playlist is formed by playlist entries that include track identifications referring to selected ones of the plurality of tracks. The plurality of tracks comprises (i) tracks present in a remote master media inventory, tracks present in an Internet-based cloud memory environment, and-or tracks present in a local media content inventory of the listener's client device; a hybrid engine software library generates personalised track playlists for a listener based on details of the listener's input, a current configuration of the system, the plurality of tracks, and current network conditions.

## Description

### Background

Internet radio is an audio service to distribute audio content via the Internet to individual consumers/listeners. Today, music is the most popular type of audio content that is distributed. However, news, weather information, audio books, spoken commentaries, e-learning content, or the like, are also offered on the Internet to an audience or a community of listeners. This is sometimes referred to as webcasting since it is not transmitted broadly and directly to its listeners through wireless means only.

Similar to traditional radio broadcasting, Internet radio involves streaming media, which is providing listeners with a continuous stream of audio that cannot be paused or replayed by a listener. In this respect, it is distinct from on-demand file serving. Internet radio is also distinct from podcasting individual content, which involves downloading rather than streaming. Many Internet radio services are associated with a corresponding traditional (terrestrial) radio station or radio network. Internet-only radio stations are independent of such associations.

### Definitions

While Internet radio services are usually accessible from anywhere in the world, some stations and networks restrict listening to in-country. Internet radio services offer news, sports, talk, and various genres of music, such as Blues, Classical, Country, Easy Listening, Electronic, Folk, Jazz, Latin, Metal, Pop, R&B and Urban, Rap, Reggae, Rock, or others, in a similar as they are available on traditional radio stations.

Streaming technology is used to distribute audio content that is encoded. Streaming audio coding formats include MP3, Ogg Vorbis, Windows Media Audio, RealAudio, or others. Audio data is continuously transmitted serially (streamed) over the local network or Internet in TCP or UDP packets, then reassembled at the receiver and presented to the listener. Most stations stream their content at data rates between 64 kbit/s and 128 kbit/s providing near CD quality audio.

### Prior art

Especially the number of mobile audio contents subscriptions via the internet is rapidly increasing. This holds particularly true for the number of in-car connected head units designed to integrate cloud-based content services. In the US market, numerous automakers already offer streaming media controlled from car dashboards. German car manufacturers such as BMW and Audi have developed vehicle interfaces that enable customers to access a wide variety of multimedia contents such as social media, Internet radio, navigations systems, etc. However, the network bandwidth required to provide satisfactory audio contents access in mobile internet environments is significant and a poor network connectivity may lead to a poor audio contents experience by a user. As a consequence, the listener could be tempted to change the station or switch off the radio altogether. This would be an undesirable scenario.

### Problem

In order to operate an attractive Internet radio with a large listener base, it was found desirable to permanently provide the listener in mobile environment with audio contents according to his/her preferences.

### Present Solution

In order to solve this problem, a computer implemented method is suggested for providing audio contents as a plurality of tracks to be played on a listener's mobile client device with Internet radio capabilities. The client device is intended to be - at least temporarily - connected to the Internet. The method comprises the following steps: obtaining, as a listener's input into the listener's client device, a playlist definition; selecting, from a plurality of tracks, tracks meeting the playlist definition to form a playlist, wherein the playlist is formed by playlist entries that include track identifications referring to selected ones of a plurality of tracks; wherein the plurality of tracks comprises (i) tracks present in a remote master media inventory, (ii) tracks present in an Internet-based cloud memory environment, and-or (iii) tracks present in a local media content inventory of the listener's client device; a hybrid engine software library to maintain personalised track playlists for a listener based on details of the listener's input, a current configuration of the system, the plurality if tracks, and current network conditions.

### Advantages and variations

Maintaining the personalised track playlists may include generating and-or modifying the playlist depending on the current network conditions. The current network conditions are usually indicated by parameters that are not readily available by application programs such as the present computer implemented method. Therefore, a variant of this computer implemented method includes maintaining a buffer memory read pointer and a buffer memory write pointer; filling a buffer memory with the selected tracks by streaming the tracks from the remote master media inventory or the Internet-based cloud memory environment, and-or the local media content inventory into the buffer memory and updating the buffer memory write pointer with a value indicative of a current buffer memory location into which currently streamed track data is being written into; reading track data from the buffer memory in order to output a respective track from the buffer memory on the listener's mobile client device and updating the buffer memory read pointer with a value indicative of a current buffer memory location being read from; comparing the read pointer value and the write pointer value; and modifying, depending on the result of the comparison, the playlist so that a next track to be output on the mobile client device is obtained from a local media content inventory of the mobile client device.

The listener's input into the listener's client device to obtain a playlist definition may include explicit user preference information; listener's past listening behavior; mood-, genre-, and theme-based input, or a combination of the above.

The playlist is provided to the listener's client device for obtaining the tracks (media items) indicated on the playlist for playing the tracks in the playlist in an order defined in the playlist.

Modifying the playlist or sequence of the tracks to be output depending on the result of the comparison can be implemented by jumping to a track entry in the playlist that is obtained from the local media content inventory of the mobile client device. Such a track from the local media content inventory is readily available without network connectivity. Alternatively, the next track can be fetched from the local media content inventory of the mobile client device in accordance with the current playlist definition to replace a track in the playlist presently unavailable due to insufficient network connectivity. In either of the two implementations, the next track to be output on the mobile client device originates from the local media content inventory of the mobile client device. The access to this track source is not influenced by the network connectivity. Thus, the listener has an uninterrupted listening experience in accordance with his/her present playlist definition.

The present solution of maintaining the read and write buffer pointers allows for an implementation independent from any input from the internet protocol layers. That is to say, there is no need of access to any underlying network status information, feedback of status information from a media player, or the like, which is usually not available to a computer program running on a high level environment controlled by an operating system. As such, the present solution, to a large degree, is hardware / resource independent.

If the playlist or sequence of the tracks to be output is modified by jumping to a track entry in the playlist that is obtained from the local media content inventory of the mobile client device, this jump should be a jump "forward", that is to say to a track that has not yet been output during the presentation of the tracks of the present playlist. In addition, this track can either be already present in the buffer memory or it is only foreseen to be transferred to the buffer memory as a future track to be output according to the present playlist. Alternatively, the track can be a new selection in accordance with the current playlist definition.

The playlist can either be implemented as a list of pointers to respective memory spaces, unique resource locators or memory spaces where the tracks of the playlist are to be found, or a sequence of the tracks of the playlist to be output as they are streamed into the buffer memory via the network or transferred from the local media content inventory of the mobile client device.

An attractive Internet radio station, as it can be provided by the present solution, appeals a listener because it contains tracks that meet his/her playlist definition and does so even in restricted connectivity scenarios. Unlike existing personalised playlist applications that generally either generate content exclusively from the user's locally stored music, in which case the music selection is limited, or exclusively from online streaming music, in which case poor network connectivity may lead to a poor user experience, the present solution provides a combination of online and offline content to afford its users/listeners access to a large, constantly updated music catalogue, and uninterrupted music playback even in limited connectivity environments. Moreover, it allows for keeping the listener's attention to the chosen internet radio station, as there is no need to change to a different station (e.g. available via FM radio) in case the Internet connection is disrupted or provides insufficient bandwidth.

The present solution is also capable of including appropriate additional audio content, such as news and weather, spoken recordings, or the like in the list of music tracks at specified time intervals. Other Internet radio providers such as we7, Last.fm, deezer, Juke, MOG, simfy, Napster, Rdio and Spotify operate with a focus on streaming "radio-like" content while failing to stream personalized content. Basically, and in contrast thereto, the present solution provides for a channelization of the streamed content where the number of channels may be as large as the number of listeners active at any given time and an enrichment / substitution of the streamed contents by locally available audio contents that also meets the listener's playlist definition in restricted connectivity scenarios. The present solution recognizes its users' listening preferences and compiles a personalized radio program, thereby bridging the gap between music owned by listeners and mass-market broadcast radio which is not personalized. Users can fulfill their needs by streaming various contents on internet-capable devices such as a mobile phones, TV or tablets and integrate different formats ranging from text to video into those devices. This unique audio streaming technology is most attractive to players in the worldwide automotive industry to provide user-oriented active and passive audio streaming solutions for in-car entertainment. This solution provides listeners with a uniquely personalized content experience. In addition, this technology is highly scalable and flexible to allow continuous expansion of the content offering from a multi-format, multi-channel and multi-content platform. It creates an end-to-end service that enables users to access personalized content on any and each of the connected devices they use (e.g. laptop, or tablet computer, smartphone, e-book with Internet access, TV, in-vehicle-infotainment platform, etc.). This solution provides listeners with a cost efficient and predictable access to content. It allows satisfying the demand arising from the growth in mobile communications market, digital music and streaming consumption. The increasing connected car development sees more and more customers to demand for audio content and all-time connectivity /availability of audio contents in automobiles. Especially the connected cars market is expanding rapidly where a growing number of web radio and other connected applications are implemented and integrated into in-car entertainment systems.

Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims, or may be learned by the practice of the disclosed concepts as set forth herein.

Tracks that meet a playlist definition can be selected from a plurality of tracks to form the playlist. The plurality of tracks comprises tracks present in a remote master media inventory, tracks present in an Internet-based cloud memory environment, and-or tracks present in a local media content inventory of the listener's client device. Selecting tracks that meet the playlist definition includes comparing the playlist definition with entries for tracks in a metadata encyclopedia which includes metadata derived from a master metadata encyclopedia referring to the tracks present in the remote master media inventory and the tracks present in the cloud memory environment, and the local media content inventory kept in the local listener's client device. The metadata encyclopedia is kept locally in the client device. Each entry in the local metadata encyclopedia refers to a respective track and includes at least one track descriptor and at least one similarity data descriptor. The playlist can then be provided to the listener's client device for obtaining the tracks indicated on the playlist for playing the tracks in the playlist in an order defined in the playlist.

The track descriptors may include one or more of the following: name of a track, artist or genre, melody, harmony, instrumentation, rhythm, vocals, lyrics, available on local device, etc. Similarity data descriptors may include one or more of the following: how similar is a certain artist to another one, how similar is a certain track to another one, or how similar is the instrumentation of a certain track to the instrumentation of a certain track to another one.

The metadata encyclopedia may include: computer-software-generated track-to-track similarity coefficients; computer-software-generated artist-to-artist similarity coefficients; explicit user preference information; listener's past listening behavior; existing mood-, genre-, and theme-based reference playlists; computer-software-generated content-based track annotations based on mood, genre, etc., editorial track annotations, or a combination of the above.

The playlist definition may be either chosen from a predefined set of playlist definitions or created by a listener, and includes "User Station", "Artist Station", "Broadcast Station", "Mood / Genre Station" and-or "Listener's Station".

Prior to providing the playlist to a streaming engine in the client mobile device, the playlist can be displayed to the listener, who then is offered the choice to skip tracks or rate tracks with "Love" and "Ban" buttons on the Internet media player device.

Selecting a seed media item may include manipulating a touchscreen on the listeners' client device using sweeping finger gestures to scroll through a list of media items displayed on the touchscreen until a desired seed media item is displayed, and then selecting the seed media item by touching and releasing the seed media item.

A computer-readable media may be provided with computer-executable instructions or data structures stored thereon to execute the method defined above.

A client device may include a processor to execute the method defined above and a memory to store the various program and data items such as the local metadata encyclopedia, the hybrid engine, etc. and a plurality of tracks or media items, a human - machine interface to receive the playlist definition or the seed media item as the listener's input into the listener's client device, and a processor to execute the method defined above.

### Brief description of the drawings

In order to best describe the manner in which the above described solutions may be implemented, as well as define other advantages and features of above described solutions, a more particular description is provided below and is illustrated in the appended drawings. Understanding that these drawings depict only exemplary embodiments of the solutions and are not therefore to be considered to be limiting in scope, the examples will be described and explained with additional specificity and detail through the use of the accompanying drawings in which:
FIG. 1 illustrates a schematic overview of the system architecture involved in providing audio contents to a mobile client device; and
FIG. 2 illustrates a schematic overview of the listener's device memory buffer organization and content.

### Detailed description of the drawings

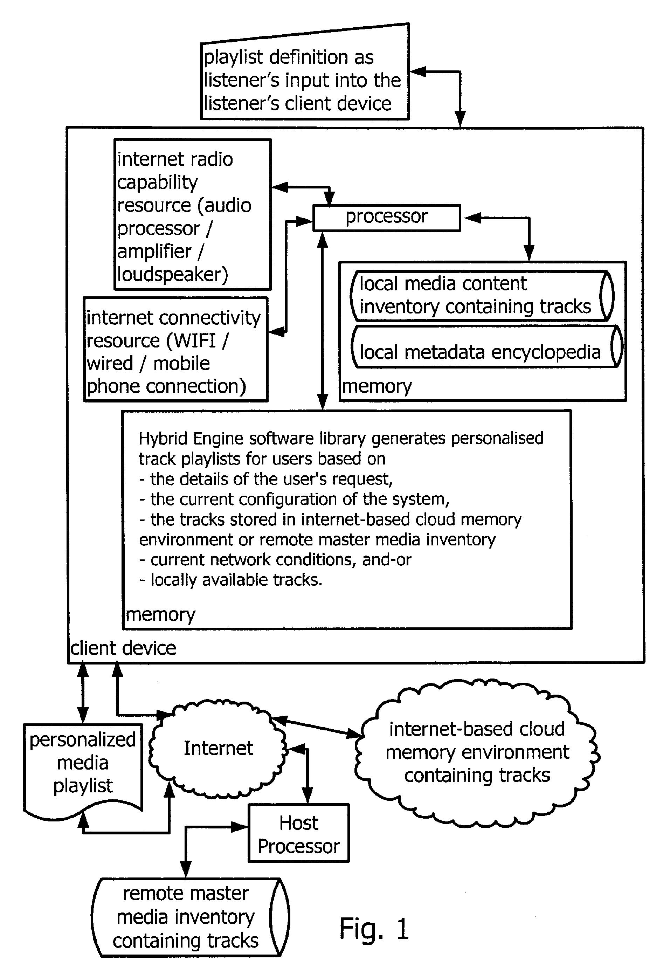

The present solution, as generally shown in Fig. 1, provides methods and arrangements for facilitating Internet radio playlist generation for a listener based at least in part on media library inventory information provided by a number of sources. In this context, an exemplary program or system in which the individuals (listeners) are participating is an Internet radio station to which listeners can subscribe as "premium users" or simply receive the content stream for free. Listeners participating in the present system have access to and control over a stationary or mobile device with Internet radio capabilities. A master media inventory can be maintained in a single host environment or in an Internet cloud environment from which its content is streamed to the listeners in accordance with the / their playlist/s. A track that is only available in the master media inventory will be streamed to the listener's device if that track is on the listener's playlist. Alternatively, the listener's device is provided with a URL (unique resource locator) of a specific track, where the listener's device has access to the track in order to receive it as a stream or download and play it. In addition, the playlist can also include one or more tracks present in the memory of the listener's client device.

In addition, listeners that use the present system have access to and control over a mobile storage client device in which they maintain a local media content inventory. Alternatively, the mobile device with Internet radio capabilities may include a mobile storage device in which local media content inventory is maintained. The local content in the local inventory is pre-processed in the local device to provide a local metadata encyclopedia representative of that listener's media inventory. In addition or in lieu thereof, the local content in the local inventory is pre-processed in a central host processor to provide a metadata encyclopedia that is the completely or partially downloaded to the listener's locally kept media inventory. This metadata may contain identification data of the individual tracks (e.g. songs) presently contained in that local content inventory regardless of its origin. That is to say, the tracks may have been purchased (online), added from a CD or otherwise obtained and included in the listener's library or local content inventory maintained in the listener's client device.

A first part of the metadata in the local metadata encyclopedia can be derived via an online connection from a master metadata encyclopedia maintained and enriched centrally. A second part of the local metadata encyclopedia includes metadata derived from the local media content inventory kept in the local listener's client device or accessible by the device (e.g. via memory extensions of the local device). Both, the local and the master metadata encyclopedia maintain characteristics about a large number of tracks. In order to access a track in the listener's inventory it needs to be identified through its track identifier.

For each of the tracks, the track identifier also allows to access to respective characteristics of that track in the metadata encyclopedia.

A hybrid engine software library is maintained in the client device to generate personalised track playlists for a listener. The personalised track playlists are generated using details of the listener's input, a current configuration of the system, the plurality of tracks, and current network conditions.

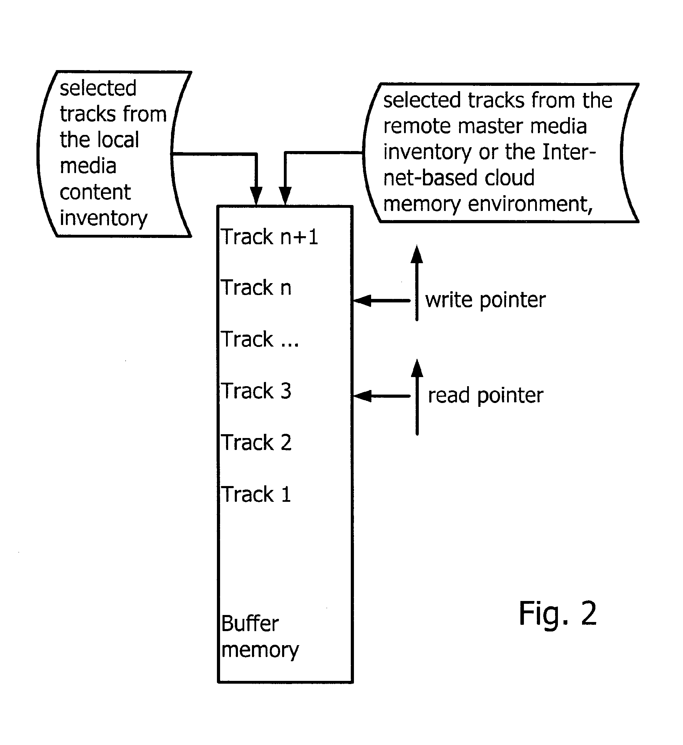

As shown in Fig. 2, a buffer memory is used to buffer the tracks streamed in accordance with the current playlist. These tracks can originate from the remote master media inventory or the Internet-based cloud memory environment, or from the local media content inventory. The hybrid engine maintains a buffer memory read pointer and a buffer memory write pointer. The buffer memory is filled with the selected tracks by streaming the tracks from the remote master media inventory or the Internet-based cloud memory environment, and-or the local media content inventory into the buffer memory. Concurrently, the buffer memory write pointer is updated with a value indicative of a current buffer memory location into which currently streamed track data is being written into. At the same time, the buffer memory is emptied by reading track data from the buffer memory in order to output a respective track from the buffer memory on the listener's mobile client device. Concurrently, the buffer memory read pointer is updated the buffer memory read pointer with a value indicative of a current buffer memory location being read from.

In a continuous endless process, the read pointer value and the write pointer value are compared in order to assess whether the read pointer is about to come too close to the write pointer that there is the risk that the buffer is emptied, that is to say that there is not more track data to be output from the buffer memory on the listener's mobile client device.

In one variant, the comparison is a simple subtraction of the read pointer value from the write pointer value and when the difference is smaller than a certain threshold amount, the playlist is modified. In another variant, the comparison involves a consideration of the rate, with which the read pointer value approaches the write pointer value between equidistant points in time and when the rate is larger than a certain threshold amount, the playlist is modified.

In order to modify the playlist, a next track to be output on the listener's mobile client device is obtained from the local media content inventory.

In a first variant, the playlist is modified depending on the result of the comparison by jumping to a track entry in the playlist that is obtained from the local media content inventory of the mobile client device. In a second variant, the playlist is modified by fetching a track from the local media content inventory of the mobile client device in accordance with the current playlist definition to replace a track in the playlist presently unavailable due to insufficient network connectivity.

The present solution offers a personalized experience for each of its listeners. Unlike traditional radio stations that broadcast the same content to all of their listeners, the present solution enables each of their listeners to create several personalized stations. Even if the network connectivity is insufficient, the user is exposed to tracks that meet his/her playlist definition.

Embodiments within the scope of the present solution may also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures. When information is transferred or provided over a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable media.

Computer-executable instructions include, for example, instructions and data which cause a general purpose computer, special purpose computer, or special purpose processing device to perform a certain function or group of functions. Computer executable instructions also include program modules that are executed by digital processors or signal processors in stand-alone or network environments. Generally, program modules include routines, programs, objects, components, and data structures that perform particular tasks or implement particular abstract data types. Computer-executable instructions, associated data structures, and program modules represent examples of the program code means for executing steps of the methods disclosed herein. The particular sequence of such executable instructions or associated data structures represent examples of corresponding acts for implementing the functions described in such steps.

A reader skilled in the art will appreciate that other embodiments may be practiced in network computing environments with many types of computer system configurations, including personal computers, hand-held devices, multiprocessor systems, microprocessor-based or programmable consumer electronics, network PCs, minicomputers, mainframe computers, and the like. Embodiments may also be practiced in distributed computing environments where tasks are performed by local and remote processing devices that are linked (either by hardwired links, wireless links, or by a combination thereof) through a communications network. In a distributed computing environment, program modules may be located in both local and remote memory storage devices. Communication at various stages of the described system can be performed through a network cloud such as a local area network, a token ring network, the Internet, a corporate intranet, 802.11 series wireless signals, fiber-optic network, radio or microwave transmission, etc. Although the underlying communication technology may change, the fundamental principles described herein are still applicable.

The various embodiments described above are provided by way of illustration only and should not be construed to limit the invention. For example, the principles herein may be applied to an online store accessible wirelessly by a portable media playback device or by a personal computer physically connected to a network. Those skilled in the art will readily recognize various modifications and changes that may be made to the present solution without following the example embodiments and applications illustrated and described herein, and without departing from the true spirit and scope of the present disclosure.

## Claims

1. A computer implemented method for providing audio contents as a plurality of tracks to be played on a listener's mobile client device with Internet radio capabilities, the client device intended to be connected to the Internet, the method comprising:
- obtaining, as a listener's input into the listener's client device, a playlist definition;
- selecting, from a plurality of tracks, tracks meeting the playlist definition to form a playlist, wherein the playlist is formed by playlist entries that include track identifications referring to selected ones of the plurality of tracks;
wherein the plurality of tracks comprises (i) tracks present in a remote master media inventory, (ii) tracks present in an Internet-based cloud memory environment, and-or (iii) tracks present in a local media content inventory of the listener's client device;
a hybrid engine software library to generate personalised track playlists for a listener based on
- details of the listener's input,
- the plurality of tracks, and
- current network conditions.

2. The computer implemented method according to claim 1, wherein the method includes
- maintaining a buffer memory read pointer and a buffer memory write pointer,
- filling a buffer memory with the selected tracks by streaming the tracks from the remote master media inventory or the Internet-based cloud memory environment, and-or the local media content inventory into the buffer memory and updating the buffer memory write pointer with a value indicative of a current buffer memory location into which currently streamed track data is being written into;
- reading track data from the buffer memory in order to output a respective track from the buffer memory on the listener's mobile client device and updating the buffer memory read pointer with a value indicative of a current buffer memory location being read from;
- comparing the read pointer value and the write pointer value and
- modifying, depending on the result of the comparison, the playlist so that a next track to be output on the listener's mobile client device is a track obtained from a local media content inventory of the listener's client device.

3. The computer implemented method according to claim 1 or 2, wherein the method includes providing the playlist to the listener's client device for obtaining the tracks indicated on the playlist for playing the tracks in the playlist in an order defined in the playlist.

4. The computer implemented method according to any of claims 1 to 3, wherein the method includes modifying the playlist depending on the result of the comparison by (i) jumping to a track entry in the playlist that is obtained from the local media content inventory of the mobile client device or (ii) by fetching from the local media content inventory of the mobile client device in accordance with the current playlist definition to replace a track in the playlist presently unavailable due to insufficient network connectivity.

5. The computer implemented method according to any of claims 1 to 4, wherein the playlist is either implemented as a list of pointers to respective memory spaces, unique resource locators or memory spaces where the tracks of the playlist are to be found, or a sequence of the tracks of the playlist to be output.

6. The computer implemented method according to any of claims 4 or 5, wherein, when the playlist is modified by jumping to a track entry in the playlist that is obtained from the local media content inventory of the mobile client device, this jump is a jump forward in the memory buffer to a track entry that has not yet been output during the presentation of the tracks of the present playlist.

7. The computer implemented method according to claim 6, wherein this track entry is either already present in the buffer memory or it is foreseen to be transferred to the buffer memory as a future track to be output according to the present playlist, or this track entry is a new selection in accordance with the current playlist definition.

8. A listener's mobile client device including data processing and Internet radio capabilities, adapted and programmed for providing audio contents as a plurality of tracks to be played on the client device intended to be connected to the Internet, the client device being adapted and programmed to
- obtain, as a listener's input into the listener's client device, a playlist definition;
- select, from a plurality of tracks, tracks meeting the playlist definition to form a playlist, wherein the playlist is formed by playlist entries that include track identifications referring to selected ones of the plurality of tracks;
wherein the plurality of tracks comprises (i) tracks present in a remote master media inventory, (ii) tracks present in an Internet-based cloud memory environment, and-or (iii) tracks present in a local media content inventory of the listener's client device;
the listener's client device including a hybrid engine software library being adapted and programmed to generate personalised track playlists for a listener based on
- details of the listener's input,
- a current configuration of the system,
- the plurality of tracks, and
- current network conditions.

9. The listener's mobile client device according to claim 8, adapted and programmed for
- maintaining a buffer memory read pointer and a buffer memory write pointer,
- filling a buffer memory with the selected tracks by streaming the tracks from the remote master media inventory or the Internet-based cloud memory environment, and-or the local media content inventory into the buffer memory and updating the buffer memory write pointer with a value indicative of a current buffer memory location into which currently streamed track data is being written into;
- reading track data from the buffer memory in order to output a respective track from the buffer memory on the listener's mobile client device and updating the buffer memory read pointer with a value indicative of a current buffer memory location being read from;
- comparing the read pointer value and the write pointer value and
- modifying, depending on the result of the comparison, the playlist so that a next track to be output on the listener's mobile client device is a track obtained from a local media content inventory of the listener's client device.

10. The listener's mobile client device according to claims 8 or 9, adapted and programmed for
providing the playlist to the listener's client device for obtaining the tracks indicated on the playlist for playing the tracks in the playlist in an order defined in the playlist.

11. The listener's mobile client device according to any of claims 8 to 10, adapted and programmed for
modifying the playlist depending on the result of the comparison by (i) jumping to a track entry in the playlist that is obtained from the local media content inventory of the mobile client device or (ii) by fetching from the local media content inventory of the mobile client device in accordance with the current playlist definition to replace a track in the playlist presently unavailable due to insufficient network connectivity.

12. The listener's mobile client device according to any of claims 8 to 11, adapted and programmed for
implementing the playlist either as a list of pointers to respective memory spaces, unique resource locators or memory spaces where the tracks of the playlist are to be found, or a sequence of the tracks of the playlist to be output.

13. The listener's mobile client device according to any of claims 8 to 12, adapted and programmed for
modifying the playlist by jumping to a track entry in the playlist that is obtained from the local media content inventory of the mobile client device, and wherein this jump is a jump forward in the memory buffer to a track entry that has not yet been output during the presentation of the tracks of the present playlist.

14. The listener's mobile client device according to any of claims 8 to 13, adapted and programmed for
having this track entry either already present in the buffer memory or it is foreseen to be transferred to the buffer memory as a future track to be output according to the present playlist, or this track entry is be a new selection in accordance with the current playlist definition.

15. A computer-readable media provided with computer-executable instructions or data structures stored thereon to execute the method defined above.
